# DEMANDE DE BREVET EUROPEEN

(11) **EP 4 796 772 A1**
(43) Date de publication de la demande: **26.08.2026**
(21) Numéro de dépôt: 26153270.9
(22) Date de dépôt: 21.01.2026
(51) Int. Cl.: F02C 3/22, F02C 6/00, F02C 7/22, F02C 7/224, F02C 7/228, F02C 7/26, F02K 3/10

(54) **SYSTÈME DE MOTORISATION POUR UN AÉRONEF COMPORTANT DES MOYENS POUR CHAUFFER DU DIHYDROGÈNE AVANT D'ALIMENTER UN MOTEUR EN DIHYDROGÈNE**

(30) Priorité: 20.02.2025 FR 2501781
(71) Demandeur: Airbus Operations S.A.S., 31060 Toulouse (FR)
(72) Inventeur: BELLEVILLE, Mathieu, 31060 Toulouse Cedex 9 (FR)
(74) Mandataire: Airbus-OPS SAS

(57) **Abrégé**

L'invention concerne un système de motorisation (150) pour aéronef comportant un moteur (152) avec une chambre de combustion (152c) et un bloc turbine (152d, 152e), une première rampe d'injecteurs (156a) pour la chambre de combustion (152c), une deuxième rampe d'injecteurs (156b) en aval du bloc turbine (152d-e), une canalisation d'apport (154) et une boucle thermique (160) comportant un premier échangeur thermique (162) sur une canalisation d'apport (154) en dihydrogène, un deuxième échangeur thermique (164) où la deuxième rampe d'injecteurs (156b) est orientée vers ce dernier et des canalisations (166) entre les échangeurs thermiques (162, 164) pour chauffer le dihydrogène circulant dans la canalisation d'apport (154) avant son arrivée aux rampes d'injecteurs (156a-b).

Avec un tel arrangement, même au démarrage, lorsque le moteur est froid, le dihydrogène est chauffé avant de venir alimenter le moteur.

## Description

### DOMAINE TECHNIQUE

La présente invention concerne un système de motorisation pour un aéronef comportant un moteur consommant du dihydrogène et des moyens pour réchauffer le dihydrogène. La présente invention concerne également un aéronef comportant au moins un tel système de motorisation.

### ÉTAT DE LA TECHNIQUE ANTÉRIEURE

Un aéronef comporte classiquement des moteurs qui assurent le déplacement dudit aéronef. Ces moteurs sont classiquement alimentés avec un carburant afin de les faire fonctionner. Pour réduire l'empreinte carbone, il est connu d'utiliser du dihydrogène comme carburant pour faire fonctionner les moteurs. Un aéronef comporte alors un réservoir dans lequel est stocké le dihydrogène. Le dihydrogène est généralement stocké sous forme liquide et pour un meilleur rendement du moteur, il est souhaitable que le dihydrogène soit sous forme gazeuse et il est donc nécessaire de mettre en place un système qui réchauffe le dihydrogène avant d'alimenter le moteur. Il est souhaitable que ce système permette de réchauffer le dihydrogène même au moment du démarrage lorsque le moteur est froid.

Les documents US 2022/099299 A1 et FR 2 967 725 A1 décrivent chacun un système de motorisation pour aéronef selon l'art antérieur. Le document FR 3 128 738 A1 décrit un système de conditionnement de carburant pour alimenter une turbomachine d'aéronef selon l'art antérieur.

### EXPOSÉ DE L'INVENTION

Un objet de la présente invention est de proposer un système de motorisation pour un aéronef comportant un moteur alimenté en dihydrogène et un système qui permet de chauffer le dihydrogène sortant du réservoir avant son introduction dans le moteur.

À cet effet, est proposé un système de motorisation pour un aéronef comportant un réservoir dans lequel est stocké du dihydrogène, le système de motorisation comportant :
- un moteur avec une chambre de combustion et un bloc turbine arrangé en aval de la chambre de combustion,
- une première rampe d'injecteurs disposée dans la chambre de combustion,
- une deuxième rampe d'injecteurs disposée en aval du bloc turbine,
- une canalisation d'apport arrangée pour transporter du dihydrogène du réservoir à chaque rampe d'injecteurs, et
- une boucle thermique comportant :
   - un premier échangeur thermique arrangé sur la canalisation d'apport en amont des deux rampes d'injecteurs,
   - un deuxième échangeur thermique arrangé de manière à ce que la deuxième rampe d'injecteurs soit orientée vers le deuxième échangeur thermique, et
   - une série de canalisations fluidiquement connectée entre le premier échangeur thermique et le deuxième échangeur thermique de manière à chauffer le dihydrogène circulant dans la canalisation d'apport avant son arrivée aux rampes d'injecteurs.

Avec un tel arrangement, même au démarrage, lorsque le moteur est froid, le dihydrogène est chauffé avant de venir alimenter le moteur.

Selon un mode de réalisation particulier, la série de canalisations comporte une canalisation de transfert formant une boucle dont une première extrémité est arrangée dans le premier échangeur thermique et dont une deuxième extrémité est arrangée dans le deuxième échangeur thermique, où la canalisation de transfert est remplie d'un fluide caloporteur en mouvement.

Selon un autre mode de réalisation particulier, la série de canalisations est constituée de la canalisation d'apport qui traverse successivement le premier échangeur thermique, le deuxième échangeur thermique puis le premier échangeur thermique pour rejoindre les rampes d'injecteurs.

Avantageusement, le deuxième échangeur thermique est disposé en aval de la deuxième rampe d'injecteurs.

Avantageusement, le deuxième échangeur thermique est disposé en amont de la deuxième rampe d'injecteurs.

Avantageusement, le système de motorisation comporte pour chaque rampe d'injecteurs, une vanne de régulation montée sur la canalisation d'apport entre le premier échangeur thermique et ladite rampe d'injecteurs et une unité de contrôle arrangée pour commander en ouverture et en fermeture chaque vanne de régulation indépendamment.

L'invention propose également un aéronef comportant :
- un réservoir dans lequel est stocké du dihydrogène, et
- un système de motorisation selon l'une des variantes précédentes, où la canalisation d'apport est fluidiquement connectée au réservoir.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef selon l'invention,
La figure 2 est une représentation schématique d'un système de motorisation selon un premier mode de réalisation de l'invention,
La figure 3 est une représentation schématique d'un système de motorisation selon un deuxième mode de réalisation de l'invention,
La figure 4 est une représentation schématique d'un système de motorisation selon un troisième mode de réalisation de l'invention, et
La figure 5 est une représentation schématique d'un exemple d'une architecture matérielle d'une unité de contrôle de l'aéronef.

### EXPOSÉ DÉTAILLE DE MODES DE RÉALISATION

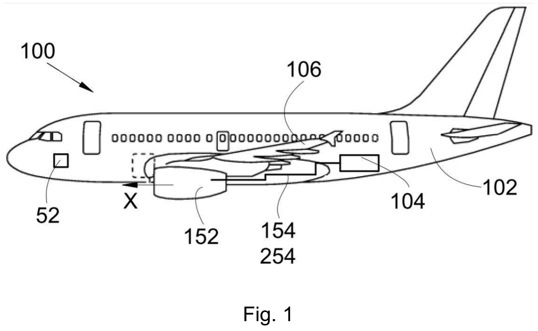

La figure 1 montre un aéronef 100 qui comporte un fuselage 102 à l'intérieur duquel est logé au moins un réservoir 104 dans lequel est stocké du dihydrogène en particulier liquide. L'aéronef 100 comporte également, de part et d'autre du fuselage 102, une aile 106 sous chacune desquelles est fixé au moins un moteur 152 fonctionnant avec du dihydrogène gazeux. Le moteur 152 est par exemple du type turboréacteur ou turbopropulseur et avec une chambre de combustion où le dihydrogène est brûlé.

L'aéronef 100 comporte également une unité de contrôle 52 et une canalisation d'apport 154, 254 fluidiquement connectée à la sortie du réservoir 104 et arrangée pour transporter du dihydrogène du réservoir 104 au moteur 152.

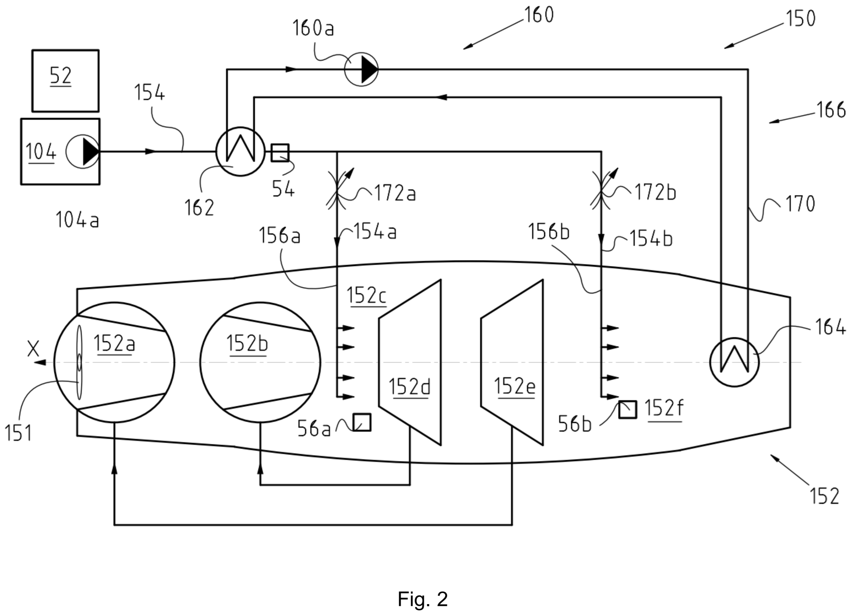

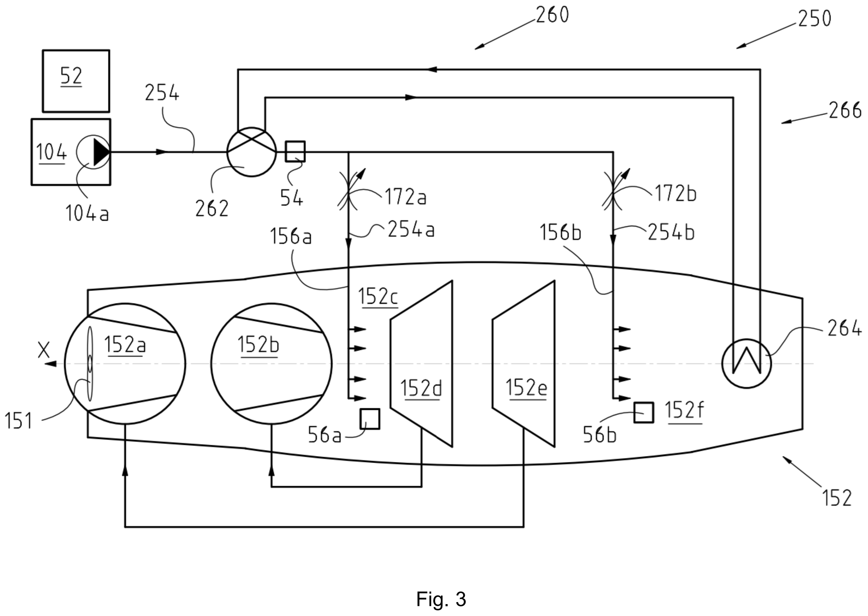

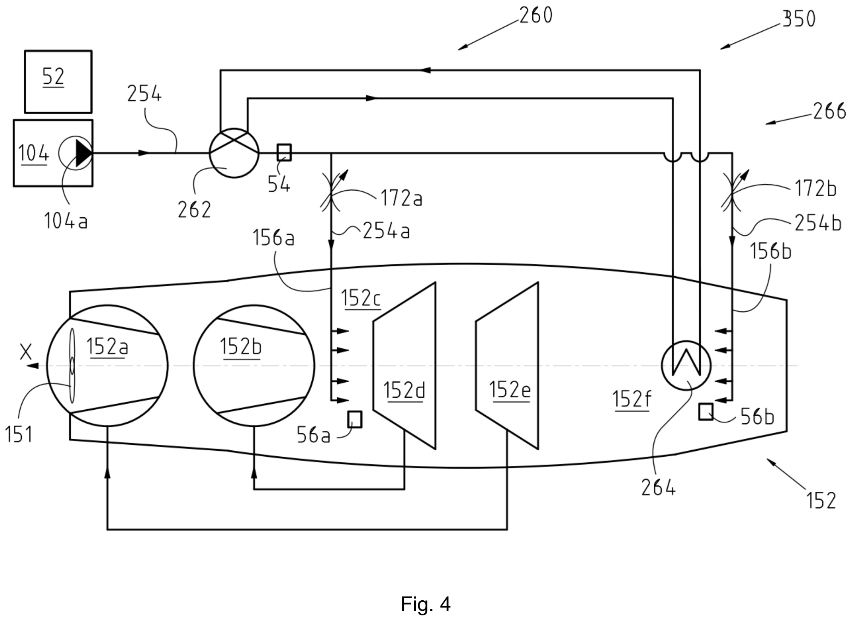

L'aéronef 100 comporte également un système de motorisation 150, 250, 350 selon l'invention et dont trois modes de réalisation sont représentés aux figures 2 à 4, et où l'axe longitudinal X représente l'axe longitudinal du moteur 152 qui est globalement parallèle à l'axe longitudinal de l'aéronef 100 et qui est orienté vers l'avant de l'aéronef 100. D'autre part, les termes " avant " et " arrière " sont à considérer par rapport à une direction d'avancement de l'aéronef 100 lors du fonctionnement du moteur 152, cette direction étant représentée schématiquement par l'axe longitudinal X.

Dans chacun des modes de réalisation représentés, le système de motorisation 150, 250, 350 comporte un moteur 152 et le moteur 152 comporte de l'avant vers l'arrière un bloc compresseur 152a-b avec par exemple une soufflante 151 ou une hélice, une chambre de combustion 152c dans laquelle le dihydrogène est brûlé et un bloc turbine 152d-e en aval de la chambre de combustion 152c.

Dans les modes de réalisation de l'invention représentés ici, le bloc compresseur 152a-b comporte un premier étage de compression 152a et un deuxième étage de compression 152b et de la même manière, le bloc turbine 152d-e comporte un premier étage de turbine 152d et un deuxième étage de turbine 152e. Classiquement, lorsque le dihydrogène est brûlé, il génère des gaz qui s'échappent vers l'arrière à travers le bloc turbine 152d-e en entraînant en rotation les pales qui le composent autour de l'axe longitudinal X et par l'intermédiaire d'un arbre fixé entre le bloc compresseur 152a-b et le bloc turbine 152d-e, les pales constituant le bloc compresseur 152a-b sont à leur tour entraînées en rotation autour de l'axe longitudinal X.

Ainsi, un flux d'air pénètre dans le moteur 152 par l'avant passe à travers le bloc compresseur 152a-b, arrive dans la chambre de combustion 152c où le dihydrogène est brûlé, les gaz brûlés s'échappent alors à travers le bloc turbine 152d-e et enfin à travers une tuyère 152f en aval du bloc turbine 152d-e.

Le système de motorisation 150, 250, 350 comporte également une première rampe d'injecteurs 156a où les injecteurs sont disposés dans la chambre de combustion 152c de manière à pulvériser du dihydrogène, en particulier sous forme gazeuse, dans la chambre de combustion 152c où il est enflammé par un premier système d'allumage 56a associé aux injecteurs et assurant le démarrage de la combustion du mélange dihydrogène et dioxygène de l'air, cette combustion étant ensuite autoentretenue.

Le système de motorisation 150, 250, 350 comporte également une deuxième rampe d'injecteurs 156b où les injecteurs sont disposés en aval du bloc turbine 152d-e. La deuxième rampe d'injecteurs 156b est arrangée dans le flux gazeux circulant dans le moteur 152 à l'arrière du bloc turbine 152d-e, et plus particulièrement ici dans la tuyère 152f.

La canalisation d'apport 154, 254 est ainsi arrangée pour transporter le dihydrogène du réservoir 104 à chaque rampe d'injecteurs 156a-b. À cette fin, une pompe d'alimentation 104a qui fait circuler le dihydrogène dans la canalisation d'apport 154, 254 est prévue au niveau du réservoir 104. Bien sûr, la pompe d'alimentation 104a peut être disposée à un autre endroit sur la canalisation d'apport 154, 254.

Dans chacun des modes de réalisation décrits ici, le système de motorisation 150, 250, 350 comporte également une boucle thermique 160, 260 qui assure le réchauffement du dihydrogène entre le moment où il quitte le réservoir 104 et avant qu'il atteigne la chambre de combustion 152c.

La boucle thermique 160, 260 prend une première forme dans le cas du premier mode de réalisation de l'invention et une deuxième forme dans le cas du deuxième et du troisième modes de réalisation de l'invention.

D'une manière générale, la boucle thermique 160, 260 comporte un premier échangeur thermique 162, 262, un deuxième échangeur thermique 164, 264 et une série de canalisations 166, 266.

Le premier échangeur thermique 162, 262 est arrangé sur la canalisation d'apport 154, 254 en amont des deux rampes d'injecteurs 156a-b et donc globalement entre les rampes d'injecteurs 156a-b et le réservoir 104.

Le deuxième échangeur thermique 164, 264 est arrangé de manière à ce que la deuxième rampe d'injecteurs 156b soit orientée vers le deuxième échangeur thermique 164, 264, c'est-à-dire que les injecteurs expulsent le dihydrogène en direction du deuxième échangeur thermique 164, 264. Le deuxième échangeur thermique 164, 264 est donc disposé dans le flux de gaz en arrière du bloc turbine 152d-e, et plus particulièrement ici dans la tuyère 152f.

Comme précédemment, il est également prévu un deuxième système d'allumage 56b associé aux injecteurs et assurant le démarrage de la combustion du dihydrogène sortant des injecteurs de la deuxième rampe d'injecteurs 156b, cette combustion étant ensuite autoentretenue. Cette combustion orientée vers le deuxième échangeur thermique 164, 264 assure le réchauffement du dihydrogène ou d'un fluide caloporteur comme cela est expliqué ci-dessous.

La série de canalisations 166, 266 forme un réseau de canalisations qui est fluidiquement connecté entre le premier échangeur thermique 162, 262 et le deuxième échangeur thermique 164, 264 de manière à chauffer le dihydrogène circulant dans la canalisation d'apport 154, 254 avant son arrivée aux rampes d'injecteurs 156a-b et plus particulièrement à la première rampe d'injecteurs 156a.

Ainsi, le dihydrogène est réchauffé avant son arrivée dans la chambre de combustion 152c, ce qui assure un meilleur rendement du moteur 152.

Dans le premier mode de réalisation de l'invention, le réchauffement du dihydrogène s'effectue à travers un échange thermique avec un fluide caloporteur. La série de canalisations 166 comporte ainsi une canalisation de transfert 170 qui forme une boucle dans laquelle le fluide caloporteur circule en étant mis en mouvement ici par une pompe de transfert 160a arrangée sur la canalisation de transfert 170.

Le fluide caloporteur circule ainsi en boucle entre une première extrémité et une deuxième extrémité de la boucle. La première extrémité est arrangée dans le premier échangeur thermique 162 de manière à réchauffer le dihydrogène circulant dans la canalisation d'apport 154 par échange de calories avec le fluide caloporteur. La deuxième extrémité est arrangée dans le deuxième échangeur thermique 164 de manière à réchauffer le fluide caloporteur par échange de calories avec le dihydrogène qui brûle en sortie des injecteurs de la deuxième rampe d'injecteurs 156b.

Le dihydrogène sortant du réservoir 104 traverse ainsi le premier échangeur thermique 162, où il se réchauffe au contact du fluide caloporteur, puis rejoint les deux rampes d'injecteurs 156a-b pour alimenter la chambre de combustion 152c et réchauffer le deuxième échangeur thermique 164. Pendant ce temps, le fluide caloporteur circule entre les deux échangeurs thermiques 162 et 164.

Dans le deuxième et le troisième modes de réalisation de l'invention, le réchauffement du dihydrogène s'effectue à travers un réchauffement direct du dihydrogène au niveau du deuxième échangeur thermique 264. La série de canalisations 266 est ainsi constituée de la canalisation d'apport 254 qui traverse successivement le premier échangeur thermique 262, le deuxième échangeur thermique 264 puis à nouveau le premier échangeur thermique 262 pour rejoindre les rampes d'injecteurs 156a-b pour alimenter la chambre de combustion 152c et réchauffer le deuxième échangeur thermique 264.

Le dihydrogène sortant du réservoir 104 traverse ainsi le premier échangeur thermique 262, où il se réchauffe au contact du dihydrogène provenant du deuxième échangeur thermique 264, puis il rejoint le deuxième échangeur thermique 264 où il est réchauffé par échange de calories avec le dihydrogène qui brûle en sortie des injecteurs de la deuxième rampe d'injecteurs 156b, puis il retraverse le premier échangeur thermique 262 où il réchauffe le dihydrogène provenant du réservoir 104, et enfin, il rejoint les deux rampes d'injecteurs 156a-b pour alimenter la chambre de combustion 152c et réchauffer le deuxième échangeur thermique 264.

Dans le troisième mode de réalisation de l'invention, le deuxième échangeur thermique 264 est disposé en aval de la deuxième rampe d'injecteurs 156b et les injecteurs de la deuxième rampe d'injecteurs 156b expulsent le dihydrogène vers l'avant. Ce mode de réalisation est particulièrement avantageux lorsque le dihydrogène circule directement dans le deuxième échangeur thermique 264. En effet, en cas de fuite de dihydrogène au niveau dudit deuxième échangeur thermique 264, le dihydrogène issu de la fuite est automatiquement brûlé au niveau des injecteurs de la deuxième rampe d'injecteurs 156b. Bien que ce mode de réalisation soit plus particulièrement mis en œuvre dans ce mode de réalisation, il peut également être mis en œuvre dans le deuxième mode de réalisation de l'invention.

Dans le premier et le deuxième modes de réalisation de l'invention, le deuxième échangeur thermique 164, 264 est disposé en amont de la deuxième rampe d'injecteurs 156b et les injecteurs de la deuxième rampe d'injecteurs 156b expulsent le dihydrogène vers l'arrière.

Pour réguler, en particulier, les besoins de chauffage du dihydrogène, le système de motorisation 150, 250, 350 comporte pour chaque rampe d'injecteurs 156a-b, une vanne de régulation 172a-b, en particulier une vanne de régulation de débit qui est montée sur la canalisation d'apport 154, 254 entre le premier échangeur thermique 162, 262 et la rampe d'injecteurs 156a-b concernée. Chaque vanne de régulation 172a-b peut prendre une position ouverte où elle laisse passer le dihydrogène et une position fermée où elle ne laisse pas passer le dihydrogène, et elle peut prendre toute position intermédiaire pour laisser passer plus ou moins de dihydrogène.

Dans le mode de réalisation de l'invention représenté sur les figures 2 à 4, la canalisation d'apport 154, 254 se sépare en deux sous-canalisations 154a-b, 254a-b alimentant chacune une des rampes d'injecteurs 156a-b et la vanne de régulation 172a-b associée est montée sur la sous-canalisation 154a-b, 254a-b correspondante.

Afin de contrôler indépendamment chaque vanne de régulation 172a-b, le système de motorisation 150, 250, 350 comporte également une unité de contrôle 52 arrangée pour commander en ouverture et en fermeture chaque vanne de régulation 172a-b indépendamment l'une de l'autre.

L'unité de contrôle 52 contrôle également chaque système d'allumage 56a-b.

Selon un exemple de fonctionnement, dans le premier mode de réalisation, lors du démarrage du moteur 102, la première vanne de régulation 172a associée à la première rampe d'injecteurs 156a est fermée et la deuxième vanne de régulation 172b associée à la deuxième rampe d'injecteurs 156b est ouverte. Ainsi, le dihydrogène alimente la deuxième rampe d'injecteurs 156b pour chauffer le fluide caloporteur dans le deuxième échangeur thermique 164 et tant que la température du dihydrogène en sortie du premier échangeur thermique 162 n'est pas suffisante, les vannes de régulation 172a-b restent en l'état. Lorsque la température du dihydrogène en sortie du premier échangeur thermique 162 est suffisante, la première vanne de régulation 172a est ouverte pour alimenter la chambre de combustion 152c et ainsi amorcer le démarrage du moteur 152 et la deuxième vanne de régulation 172b peut être fermée ou modulée en ouverture.

Pour connaître la température du dihydrogène en sortie du premier échangeur thermique 162, un capteur de température 54 est prévu et ce dernier est en communication avec l'unité de contrôle 52.

De la même manière, en vol, lorsqu'il est nécessaire de réchauffer le dihydrogène en sortie du premier échangeur thermique 162, la deuxième vanne de régulation 172b est modulée en ouverture pour réchauffer le fluide caloporteur et donc le dihydrogène en sortie du réservoir 104.

Selon un exemple de fonctionnement, dans le deuxième et le troisième modes de réalisation, lors du démarrage du moteur 102, la première vanne de régulation 172a associée à la première rampe d'injecteurs 156a est fermée et la deuxième vanne de régulation 172b associée à la deuxième rampe d'injecteurs 156b est ouverte. Ainsi, le dihydrogène alimente la deuxième rampe d'injecteurs 156b pour chauffer le dihydrogène dans le deuxième échangeur thermique 264 et tant que la température du dihydrogène en sortie du premier échangeur thermique 262 n'est pas suffisante, les vannes de régulation 172a-b restent en l'état. Lorsque la température du dihydrogène en sortie du premier échangeur thermique 262 est suffisante, la première vanne de régulation 172a est ouverte pour alimenter la chambre de combustion 152c et ainsi amorcer le démarrage du moteur 152 et la deuxième vanne de régulation 172b peut être fermée ou modulée en ouverture.

Pour connaître la température du dihydrogène en sortie du premier échangeur thermique 162, un capteur de température 54 est prévu et ce dernier est en communication avec l'unité de contrôle 52.

De la même manière, en vol, lorsqu'il est nécessaire de réchauffer le dihydrogène en sortie du premier échangeur thermique 162, la deuxième vanne de régulation 172b est modulée en ouverture pour réchauffer le fluide caloporteur et donc le dihydrogène en sortie du réservoir 104.

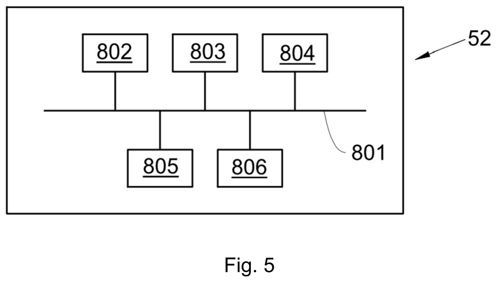

Selon un mode de réalisation particulier représenté à la figure 5, l'unité de contrôle 52 comporte, reliés par un bus de communication 801 : un processeur 802 ou CPU (« Central Processing Unit » en anglais) ; une mémoire vive RAM 803 (« Random Access Memory » en anglais) ; une mémoire morte ROM 804 ou Flash (« Read Only Memory » en anglais) ; une unité de stockage 805 telle qu'un disque dur ou un lecteur de support de stockage, tel qu'un lecteur de cartes SD (« Secure Digital » en anglais) ; au moins une interface de communication 806 , permettant par exemple à l'unité de contrôle de communiquer avec les vannes, les pompes, les capteurs, les systèmes d'allumage....

Le processeur est capable d'exécuter des instructions chargées dans la RAM à la mise sous tension à partir de la ROM ou de la Flash, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en œuvre, par le processeur, de tout ou partie des algorithmes et étapes décrits ci-dessus.

Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

## Revendications

1. Système de motorisation (150, 250, 350) pour un aéronef (100) comportant un réservoir (104) dans lequel est stocké du dihydrogène, le système de motorisation (150, 250, 350) comportant :
- un moteur (152) avec une chambre de combustion (152c) et un bloc turbine (152d, 152e) arrangé en aval de la chambre de combustion (152c),
- une première rampe d'injecteurs (156a) disposée dans la chambre de combustion (152c),
- une deuxième rampe d'injecteurs (156b) disposée en aval du bloc turbine (152d, 152e),
- une canalisation d'apport (154, 254) arrangée pour transporter du dihydrogène du réservoir (104) à chaque rampe d'injecteurs (156a-b), et
- une boucle thermique (160, 260) comportant :
. un premier échangeur thermique (162, 262) arrangé sur la canalisation d'apport (154, 254) en amont des deux rampes d'injecteurs (156a-b), et
. un deuxième échangeur thermique (164, 264),
**caractérisé en ce que** :
- le deuxième échangeur thermique (164, 264) est arrangé de manière à ce que la deuxième rampe d'injecteurs (156b) soit orientée vers le deuxième échangeur thermique (164, 264), et
- la boucle thermique (160, 260) comporte en outre une série de canalisations (166, 266) fluidiquement connectée entre le premier échangeur thermique (162, 262) et le deuxième échangeur thermique (164, 264) de manière à chauffer le dihydrogène circulant dans la canalisation d'apport (154, 254) avant son arrivée aux rampes d'injecteurs (156a-b).

2. Système de motorisation (150, 350) selon la revendication 1, **caractérisé en ce que** la série de canalisations (166) comporte une canalisation de transfert (170) formant une boucle dont une première extrémité est arrangée dans le premier échangeur thermique (162) et dont une deuxième extrémité est arrangée dans le deuxième échangeur thermique (164), où la canalisation de transfert (170) est remplie d'un fluide caloporteur en mouvement.

3. Système de motorisation (250) selon la revendication 1, **caractérisé en ce que** la série de canalisations (266) est constituée de la canalisation d'apport (254) qui traverse successivement le premier échangeur thermique (262), le deuxième échangeur thermique (264) puis le premier échangeur thermique (262) pour rejoindre les rampes d'injecteurs (156a-b).

4. Système de motorisation (350) selon l'une des revendications 2 ou 3, **caractérisé en ce que** le deuxième échangeur thermique (164, 264) est disposé en aval de la deuxième rampe d'injecteurs (156b).

5. Système de motorisation (150, 250) selon l'une des revendications 2 ou 3, **caractérisé en ce que** le deuxième échangeur thermique (164, 264) est disposé en amont de la deuxième rampe d'injecteurs (156b).

6. Système de motorisation (150, 250, 350) selon l'une des revendications 1 à 5, **caractérisé en ce qu'**il comporte pour chaque rampe d'injecteurs (156a-b), une vanne de régulation (172a-b) montée sur la canalisation d'apport (154, 254) entre le premier échangeur thermique (162, 262) et ladite rampe d'injecteurs (156a-b) et une unité de contrôle (52) arrangée pour commander en ouverture et en fermeture chaque vanne de régulation (172a-b) indépendamment.

7. Aéronef (100) comportant :
- un réservoir (104) dans lequel est stocké du dihydrogène, et
- un système de motorisation (150, 250, 350) selon l'une des revendications précédentes où la canalisation d'apport (154, 254) est fluidiquement connectée au réservoir (104).
